# EUROPÄISCHE PATENTANMELDUNG

(11) **EP 4 450 431 A1**
(43) Veröffentlichungstag der Anmeldung: **23.10.2024**
(21) Anmeldenummer: 24169090.8
(22) Anmeldetag: 08.04.2024
(51) Int. Cl.: B65G 47/88, B65G 65/00

(54) **VEREINZELUNGSEINHEIT, FÖRDERBAHN UND VERFAHREN ZUR VEREINZELUNG VON FÖRDERGÜTERN**

(30) Priorität: 21.04.2023 DE 102023110216
(71) Anmelder: MartinMechanic Friedrich Martin GmbH & Co. KG, 72202 Nagold (DE)
(72) Erfinder: Martin, Frank, 72202 Nagold (DE)
(74) Vertreter: Witte, Weller & Partner Patentanwälte mbB

(57) **Zusammenfassung**

Eine Vereinzelungseinheit (30, 32) für eine Förderstrecke (10) weist eine Basis (36) und einen Schieber (38) auf. Die Basis (36) trägt ein stromaufwärtiges Lagerstück (44) und ein hiervon in einer Förderrichtung (14) versetztes stromabwärtiges Lagerstück (46). Am stromaufwärtigen Lagerstück (44) ist ein ausfahrbarer Vorstopper (50) und am stromabwärtigen Lagerstück (46) ein ausfahrbarer Stopper (52) angeordnet. Der Schieber (38) ist über einen ersten Koppelmechanismus (56) mit dem Vorstopper (50) und einen zweiten Koppelmechanismus (58) mit dem Stopper (52) gekoppelt. Der Schieber (38) weist einen Betätigungsanschlag (66) auf, der von einem Förderfahrzeug (18) kontaktierbar ist, um den Schieber (38) in einer Schubrichtung (40) relativ zu dem Vorstopper (50) und dem Stopper (52) zu bewegen, so dass der Vorstopper (50) durch den ersten Koppelmechanismus (56) und der Stopper (52) durch den zweiten Koppelmechanismus (58) bewegt wird. Eine Förderbahn (12) weist eine Vereinzelungsvorrichtung (20) auf. Die Vereinzelungsvorrichtung (20) weist eine erste Vereinzelungseinheit (30) und eine zweite Vereinzelungseinheit (32) auf, die an einander abgewandten Seiten einer Förderstrecke (10) angeordnet und einander zugewandt sind. Ein Verfahren dient zur Vereinzelung von Fördergütern (16) bei einer Förderstrecke (10).

## Beschreibung

Die vorliegende Offenbarung bezieht sich auf eine Vereinzelungseinheit für eine Förderstrecke, insbesondere für eine Rollenbahn. Ferner bezieht sich die vorliegende Offenbarung auf eine Vereinzelungsvorrichtung mit zwei einander zugewandten Vereinzelungseinheiten sowie auf eine insbesondere als Rollenbahn gestaltetet Förderbahn mit einer Vereinzelungsvorrichtung. Schließlich bezieht sich die vorliegende Offenbarung auf ein Verfahren zur Vereinzelung von Fördergütern bei einer Förderstrecke, insbesondere einer Rollenbahn.

Eine Rollenbahn mit einer Vereinzelungseinrichtung ist aus der DE 43 09 222 A1 bekannt. In ähnlicher Weise offenbart die DE 196 36 842 A1 eine Vorrichtung zum Trennen von Paletten. Schwerkraftrollenbahnen als solches sind bekannt. Ein Vorteil solcher Förderstrecken ist die Nutzung der Schwerkraft für den Antrieb. Mit anderen Worten kann auf separate Antriebe für den Fördervorgang verzichtet werden. Jedoch ist regelmäßig auf der Entnahmeseite einer solchen Förderstrecke eine Separierung/Vereinzelung der Fördergüter erforderlich.

Gegenstände, die mit einer Förderanlage transportiert werden, werden allgemein als Fördergut bezeichnet. Entlang der Förderstrecke werden Fördergüter transportiert, regelmäßig umfassen die Fördergüter sogenannte Ladehilfsmittel, die wiederum zur Aufnahme von Ladegütern dienen. Die Kombination aus Ladehilfsmittel und Ladegut kann als Gebinde bezeichnet werden. Insbesondere bei Schwerkraftrollenbahnen kann es zu einer Stauung von Fördergütern kommen, beispielsweise bei der Entnahmeseite. Wenn Fördergüter gezielt (stückweise, paarweise oder dergleichen) entnommen werden sollen, muss für eine sichere Vereinzelung gesorgt werden. Es ist jedoch auch möglich, dass das Fördergut ohne zusätzliche Ladehilfsmittel transportiert wird.

Förderstrecken und Rollenbahnen, insbesondere Schwerkraftrollenbahnen, ermöglichen es, den Antrieb und/oder die Steuerung mit nur geringem Aufwand zu implementieren. Beispielsweise kann die Bewegung der Fördergüter hauptsächlich Schwerkraft basiert erfolgen, wenn eine entsprechende Neigung der Förderstrecke vorgehalten wird. Zur Vereinzelung, beispielsweise bei einer Entnahmeseite und/oder entlang der Förderstrecke zur Auflösung einer Stauung (viele Fördergüter hintereinander) ist es jedoch erforderlich, den Strom aus Fördergütern gezielt anzuhalten und selektiv freizugeben, damit eine bestimmte Menge von Fördergütern (beispielsweise genau ein Fördergut) passieren kann, wogegen stromaufwärts angeordnete Fördergüter zunächst zurückgehalten werden.

Ferner soll eine Vereinzelung möglichst auch dann verlässlich funktionieren, wenn die Fördergüter nicht perfekt einheitlich gestaltet sind. Dies umfasst beispielsweise eine hohe Funktionssicherheit auch bei geometrischen Abweichungen der Fördergüter voneinander.

Eine Vereinzelungseinheit umfasst beispielsweise eine durch einen Stopper und einen Vorstopper gebildete Schleuse. Der Stopper ist gegenüber dem Vorstopper stromabwärts angeordnet. Der Vorstopper ist gegenüber dem Stopper stromaufwärts angeordnet. Wenn die Vereinzelung beispielsweise zur Entnahme von jeweils genau einem Fördergut dienen soll, soll der Vorstopper zunächst alle Fördergüter hinter dem ersten Fördergut zurückhalten, damit das zunächst beim Stopper zurückgehaltene erste (stromabwärtige) Fördergut isoliert vom Stopper freigegeben und entnommen werden kann, ohne dass stromaufwärtige Fördergüter unkontrolliert nachströmen.

Vor diesem Hintergrund liegt der vorliegenden Offenbarung die Aufgabe zugrunde, eine Vereinzelungseinheit für eine Förderstrecke anzugeben, die bei einem einfachen mechanischen Aufbau eine hohe Funktionssicherheit für die Vereinzelung gewährleistet. Insbesondere soll die Vereinzelungseinheit robust gestaltet und tolerant gegenüber geometrischen Abweichungen der Fördergüter sein. Vorzugsweise lässt sich die Vereinzelungseinheit mit geringem Aufwand für etwaige Antriebe und/oder die Steuerung realisieren. Schließlich sollen im Rahmen der vorliegenden Offenbarung eine Vereinzelungseinrichtung mit zwei Vereinzelungseinheiten, eine mit einer Vereinzelungseinrichtung versehene Rollenbahn sowie ein Verfahren zur Vereinzelung von Fördergütern bei einer Förderstrecke angegeben werden.

Gemäß einem ersten Aspekt bezieht sich die vorliegende Offenbarung auf eine Vereinzelungseinheit für eine Förderstrecke, insbesondere eine Rollenbahn, wobei die Vereinzelungseinheit Folgendes aufweist:
- eine Basis, die ein stromaufwärtiges Lagerstück und ein hiervon in einer Förderrichtung versetztes stromabwärtiges Lagerstück trägt,
   wobei am stromaufwärtigen Lagerstück ein ausfahrbarer Vorstopper und am stromabwärtigen Lagerstück ein ausfahrbarer Stopper angeordnet ist, und
- einen Schieber, der über einen ersten Koppelmechanismus mit dem Vorstopper und einen zweiten Koppelmechanismus mit dem Stopper gekoppelt ist,
   wobei der Schieber insbesondere an seinem stromabwärtigen Ende einen Betätigungsanschlag aufweist, der von einem Förderfahrzeug kontaktierbar ist, um den Schieber in einer Schubrichtung relativ zu dem Vorstopper und dem Stopper zu bewegen, so dass der Vorstopper durch den ersten Koppelmechanismus und der Stopper durch den zweiten Koppelmechanismus bewegt wird.

Die der Offenbarung zugrunde liegende Aufgabe wird auf diese Weise gelöst.

Die Vereinzelungseinheit erlaubt eine Vereinzelung, ohne dass es hierfür aufwendiger Antriebe (Aktoren) und Steuerungstechnik bedarf. Stattdessen kann das Förderfahrzeug selbst als Aktor dienen. Die Bewegung der Vereinzelungseinheit wird durch Betätigung des Betätigungsanschlags ausgelöst. Dies kann beispielhaft durch ein Förderfahrzeug erfolgen, das zum Beispiel als AGV (Automated Guided Vehicle - Fahrerloses Transportfahrzeug) oder AMR (Autonomer mobiler Roboter) gestaltet ist. Das Förderfahrzeug kann also beispielsweise an einer Entnahmeseite einer Rollenbahn, insbesondere einer Schwerkraftrollenbahn, den Betätigungsanschlag kontaktieren, um den Schieber der Vereinzelungseinheit zu betätigen. Auf diese Weise können der Stopper und der Vorstopper gezielt angesteuert werden, um Fördergüter (Ladehilfsmittel oder dergleichen) zu vereinzeln und zu entnehmen. Zur Erkennung des Erfolgs der Übergabe kann die am Förderfahrzeug vorhandene Sensorik verwendet werden, d.h. eine weitere Sensorik an der Förderstrecke ist vorstellbar, aber nicht zwingend notwendig.

In einer beispielhaften Ausgestaltung weist daher die Vereinzelungseinheit keinen integrierten Antrieb auf. Der Antrieb wird stattdessen durch eine externe Aktivierungsbetätigung veranlasst, beispielsweise durch ein Förderfahrzeug, das gegen den Betätigungsanschlag fährt. Dies kann durch genau das Förderfahrzeug erfolgen, das zur Übernahme des Förderguts vorgesehen ist. Mit anderen Worten kann also das Förderfahrzeug in einer Übernahmeposition zur Übernahme des Förderguts derart an der Entnahmeseite positioniert sein, dass der Betätigungsanschlag durch das Förderfahrzeug betätigt wird.

In einer beispielhaften Ausgestaltung weist die Vereinzelungseinheit keine integrierte Sensorik auf. Stattdessen kann beispielhaft auf die Sensorik des Förderfahrzeugs zurückgegriffen werden, um die Betätigung des Betätigungsanschlags und/oder die Übernahme eines vereinzelten Förderguts zu erfassen.

Der Begriff Vereinzelung kann sich auf die gezielte Bereitstellung und Übergabe eines (einzigen) Förderguts beziehen. Der Begriff Vereinzelung kann sich jedoch auch auf die gezielte Bereitstellung und Übergabe einer bestimmten Anzahl (zwei, drei oder mehr) von Fördergütern beziehen.

Im Rahmen der vorliegenden Offenbarung beziehen sich die Begriffe stromaufwärts/stromaufwärtig sowie stromabwärts/stromabwärtig auf die Strömungsrichtung der Fördergüter entlang der Förderstrecke. Ein stromaufwärtiges Element ist stromaufwärts gelegen und wird eher von einem bestimmten Ladehilfsmittel passiert als ein stromabwärtiges Element. Ein stromabwärtiges Element ist stromabwärts gelegen und wird später vom Fördergut passiert als ein stromaufwärtiges Element.

Bei dem Fördergut kann es sich beispielhaft um eine Palette, eine Kiste, eine Box, ein Tray, ein Magazin oder dergleichen handeln. Die Kombination aus Ladehilfsmittel und Ladegut kann als Gebinde bezeichnet werden. Allgemein bezieht sich die vorliegende Offenbarung auf die Handhabung und Vereinzelung von Fördergütern, die entlang einer Förderstrecke transportiert werden. Neben der Handhabung von Ladehilfsmitteln kann sich daher die vorliegende Offenbarung auch auf die Handhabung von Fördergütern beziehen.

Der Vorstopper und der Stopper bilden eine Art Schleuse aus, um Fördergüter (bzw. Ladehilfsmittel) zu vereinzeln. Entlang der Förderstrecke geförderte Fördergüter passieren zuerst den Vorstopper und später den Stopper.

In einer beispielhaften Ausgestaltung ist der Stopper dazu ausgestaltet, Ladehilfsmittel/Fördergüter formschlüssig zu halten. Mit anderen Worten wird die Förderstrecke durch den Stopper bedarfsweise verriegelt oder gesperrt. In einer beispielhaften Ausgestaltung ist der Vorstopper dazu ausgestaltet, Ladehilfsmittel/Fördergüter kraftschlüssig zu halten. Dies kann beispielhaft ein seitliches Halten eines Ladehilfsmittels zwischen zwei einander zugewandten Vereinzelungseinheiten umfassen. Mit einem kraftschlüssigen Angriff können sich Ladehilfsmittel/Fördergüter bedarfsweise vor dem Stillstand verzögern lassen, ohne dass es zu einem abrupten Stillstand kommt. Vorteilhafterweise ist die durch den Kraftschluss aufgebrachte Kraft veränderbar.

Jedenfalls an einer Entnahmeseite umfasst die Vereinzelung üblicherweise nicht nur die Separierung von Fördergütern, sondern auch die Übergabe eines Förderguts an ein Förderfahrzeug oder dergleichen. Mit anderen Worten kann eine Entnahmeseite einer Förderstrecke mit zumindest einer Vereinzelungseinheit, vorzugweise mit zwei Vereinzelungseinheiten, die eine Vereinzelungseinrichtung bilden, ausgerüstet werden, um Fördergüter stückweise oder in definierter Menge von der Förderstrecke zu entnehmen.

In einer beispielhaften Ausgestaltung ist die Schubrichtung des Schiebers parallel zur Förderrichtung. In einer beispielhaften Ausgestaltung ist die Schubrichtung des Schiebers parallel zur Betätigungsbewegung. In einer beispielhaften Ausgestaltung bewirkt der erste Koppelmechanismus eine Bewegung des Vorstoppers und der zweite Koppelmechanismus eine Bewegung des Stoppers, wobei die Bewegungen beispielsweise quer zur Förderrichtung und quer zur Schubrichtung sind.

Gemäß einer beispielhaften Ausgestaltung ist der Schieber zwischen einer ersten Position, insbesondere einer stromaufwärtigen Position, und einer zweiten Position, insbesondere einer stromabwärtigen Position, beweglich, wobei in der zweiten Position des Schiebers der Vorstopper in eine eingefahrene Position und der Stopper in eine ausgefahrene Position bringbar ist, und wobei in der ersten Position des Schiebers der Vorstopper in eine ausgefahrene Position und der Stopper in eine eingefahrene Position bringbar ist.

Mit anderen Worten kann also die Betätigung des Schiebers zur Bewegung in der Schubrichtung umgelenkte Bewegungen des Stoppers und des Vorstoppers bewirken, die zueinander gegensinnig sind. Auf diese Weise kann eine Taktung bereitgestellt werden, die einer Schleuse ähnelt. Der Vorstopper und der Stopper können abwechselnd in einer eingefahrenen Position und einer ausgefahrenen Position sein, wenn der Schieber zwischen der stromabwärtigen Position und der stromaufwärtigen Position verfahren wird.

Die Bewegungen des Vorstoppers und des Stoppers müssen nicht notwendigerweise (starr und steif) zwangsgekoppelt sein. Es ist auch vorstellbar, die Bewegungen des Vorstoppers und des Stoppers elastisch miteinander zu koppeln. Auf diese Weise kann beispielhaft auf geometrische Abweichungen Rücksicht genommen werden. Ferner kann im Falle einer elastischen Kopplung bedarfsweise Energie gespeichert werden, etwa im Falle einer zwischengeschalteten Feder oder dergleichen. Durch Wahl einer geeigneten Feder kann die Kraft des Kraftschlusses/Reibschlusses angepasst werden

In der ausgefahrenen Position können der Stopper bzw. der Vorstopper Fördergüter zurückhalten. In der eingefahrenen Position können der Stopper bzw. der Vorstopper Fördergüter passieren lassen.

Gemäß einer weiteren beispielhaften Ausgestaltung weist zumindest der erste Koppelmechanismus oder der zweite Koppelmechanismus eine mit einem Mitnehmer gekoppelte Führung auf, die eine Umlenkung der Bewegung des Schiebers zur Bewegung zumindest des Vorstoppers oder des Stoppers bewirkt. Auf diese Weise kann die Bewegung des Schiebers in der Schubrichtung Bewegungen beim Stopper und beim Vorstopper wirken, die gegenüber der Schubrichtung geneigt oder sogar quer dazu orientiert sind.

Beispielhaft handelt es sich bei dem ersten Koppelmechanismus und/oder dem zweiten Koppelmechanismus um ein Koppelgetriebe, dass eine Längsbewegung in eine Querbewegung überführt, zumindest in eine Bewegung mit einer Querkomponente.

Gemäß einer beispielhaften Ausgestaltung bildet der Schieber mit dem Vorstopper ein erstes Gelenk und mit dem Stopper ein zweites Gelenk aus, wobei mit dem ersten Gelenk und dem zweiten Gelenk jeweils eine Betätigungsbewegung des Schiebers in eine Querbewegung des Vorstoppers und des Stoppers hinsichtlich der Förderstrecke umgelenkt werden kann.

Gemäß einer weiteren beispielhaften Ausgestaltung umfasst zumindest der erste Koppelmechanismus oder der zweite Koppelmechanismus eine insbesondere beim Schieber ausgebildete Führungskulisse, die mit einem Mitnehmer zusammenwirkt, der insbesondere als Rolle oder Bolzen gestaltet ist.

Die Führungskulisse bildet beispielhaft eine Rampe und/oder ein Kurvengelenk aus, um die Betätigungsbewegung in resultierende Bewegungen des Stoppers und/oder des Vorstoppers zu überführen.

Gemäß einer weiteren beispielhaften Ausgestaltung ist die zumindest eine Führungskulisse als Langloch mit einer zumindest abschnittsweise gegenüber der Schubrichtung geneigten Haupterstreckungsrichtung gestaltet. Auf diese Weise kann die Umlenkung bewerkstelligt werden. Beispielhaft ist zumindest der erste Koppelmechanismus oder der zweite Koppelmechanismus als Keilschubgetriebe mit Rollenabtastung gestaltet. Andere Getriebearten zur Überführung einer Betätigungsbewegung in einer Schubrichtung in resultierende (umgelenkte und gegensinnige) Bewegungen des Stoppers und des Vorstoppers sind denkbar.

Gemäß einer weiteren beispielhaften Ausgestaltung weisen der erste Koppelmechanismus und der zweite Koppelmechanismus jeweils eine als Langloch gestaltete Führungskulisse auf, wobei die Führungskulisse des ersten Koppelmechanismus und die Führungskulisse des zweiten Koppelmechanismus derart gegenüber der Schubrichtung geneigt sind, dass sich bei einem Hub oder Rückhub des Schiebers in der Schubrichtung der Vorstopper und der Stopper in entgegengesetzten Richtungen bewegen.

Wenn also der Schieber zwischen der stromabwärtigen und der stromaufwärtigen Position verlagert wird, führt dies zu wechselsinnigen, entgegengesetzten Bewegungen des Vorstoppers und des Stoppers. Dies lässt sich beispielsweise herbeiführen, in dem die Führungskulisse des ersten Koppelmechanismus und des zweiten Koppelmechanismus gegenüber der Förderrichtung unterschiedlich geneigt sind (beispielsweise einmal mit positivem Winkel und einmal mit negativem Winkel in Bezug auf die Förderrichtung).

Gemäß einer weiteren beispielhaften Ausgestaltung weist zumindest das stromaufwärtige Lagerstück oder das stromabwärtige Lagerstück eine Längsschubführung für den Schieber und eine Querschubführung auf, wobei die Querschubführung beim stromaufwärtigen Lagerstück die Ausfahrbewegung des Vorstoppers und beim stromabwärtigen Lagerstück die Ausfahrbewegung des Stoppers führt. Dies gilt natürlich auch für die Einfahrbewegungen.

Gemäß einer weiteren beispielhaften Ausgestaltung weist der Schieber ein Rückstellelement auf, insbesondere eine Rückstellfeder, die sich an der Basis abstützt und den Schieber stromabwärts drängt. Beispielhaft ist die Rückstellfeder an einer Schubstange geführt. Beispielhaft erstreckt sich die Rückstellfeder als gewundene Schraubenfeder um die Schubstange.

Das Rückstellelement sorgt dafür, dass der Schieber selbsttätig in die zweite Position (stromabwärtige Position) zurückkehrt, wenn der Betätigungsanschlag entlastet ist. Dies vereinfacht die Betätigung, weil zunächst nur eine Betätigungsbewegung durch Bewegung des Betätigungsanschlags in einer Richtung erforderlich ist, um den Schieber aus der zweiten Position in die erste Position und (durch das Rückstellelement) zurück zu bewegen. Mit anderen Worten kann also durch eine Betätigung ein vollständiger Zyklus der Vereinzelungseinheit ausgelöst werden.

Gemäß einer weiteren beispielhaften Ausgestaltung weist der Schieber einen ersten Schubabschnitt beim ersten Koppelmechanismus und einen zweiten Schubabschnitt beim zweiten Koppelmechanismus auf, wobei insbesondere der erste Schubabschnitt das stromaufwärtige Lagerstück und der zweite Schubabschnitt das stromabwärtige Lagerstück durchragt. Beispielhaft ist die jeweilige Führungskulisse im ersten Schubabschnitt und/oder im zweiten Schubabschnitt ausgebildet. Beispielhaft ist die jeweilige Führungskulisse zumindest abschnittsweise innerhalb des ersten oder zweiten Lagerstücks angeordnet.

Gemäß einer weiteren beispielhaften Ausgestaltung ist der Betätigungsanschlag beim zweiten Schubabschnitt angeordnet. Der zweite Schubabschnitt ist dem Stopper zugeordnet und befindet sich daher regelmäßig näher beim Ende der Förderstrecke an der Entnahmeseite als der erste Schubabschnitt. Daher kann beim zweiten Schubabschnitt der Betätigungsanschlag günstig positioniert werden, um durch ein Förderfahrzeug zu Betätigungszwecken kontaktiert zu werden.

Gemäß einer weiteren beispielhaften Ausgestaltung weist der Schieber ein Vorspannelement auf, insbesondere eine Vorspannfeder, die den ersten Schubabschnitt und den zweiten Schubabschnitt entlang der Schubrichtung auseinanderdrängt.

Beispielhaft ist die Vorspannfeder an einer Schubstange geführt. Die Vorspannfeder kann zu Zwecken des Toleranzausgleichs bzw. als Energiespeicher dienen. Die Vorspannfeder erlaubt gegebenenfalls eine weiche, elastische Kopplung zwischen dem Stopper und dem Vorstopper. Wenn der Stopper und der Vorstopper nicht starr miteinander zwangsgekoppelt sind, kann sich ein reibschlüssiges Festhalten von Fördergütern durch den Vorstopper vereinfachen. Es wird sichergestellt, dass der Vorstopper mit einer geeigneten Anpresskraft auf das Fördergüter einwirkt. Die Vorspannfeder dient dabei zur Kraftbegrenzung.

Gemäß einer weiteren beispielhaften Ausgestaltung erstreckt sich zwischen dem ersten Schubabschnitt und dem zweiten Schubabschnitt eine Schubstange, die den ersten Schubabschnitt und den zweiten Schubabschnitt miteinander verbindet, wobei die Schubstange insbesondere eine Relativbewegung zwischen dem ersten Schubabschnitt und dem zweiten Schubabschnitt in der Schubrichtung ermöglicht.

Die Schubstange ist beispielhaft ein Bestandteil des Schiebers. Die Schubstange kann mit dem Rückstellelement und/oder dem Vorspannelement gekoppelt werden. Beispielhaft dient die Schubstange als Führung für das Rückstellelement und/oder das Vorspannelement. Wenn die Schubstange eine Relativbewegung zwischen dem ersten Schubabschnitt und dem zweiten Schubabschnitt in der Schubrichtung ermöglicht, ist keine starre Zwangskopplung zwischen dem Stopper und dem Vorstopper gegeben. Stattdessen kann beispielhaft mit einer Vorspannfeder für eine elastische Kopplung zwischen dem Stopper und dem Vorstopper gesorgt werden. Auf diese Weise lassen sich Überbestimmtheiten bei den Koppelmechanismen vermeiden. Beispielhaft lässt sich der Vorstopper auch dann zum seitlichen Festhalten von Fördergütern nutzen, wenn deren Breite (zwischen zwei einander gegenüberliegenden Vereinzelungseinheiten) etwas schwankt.

Gemäß einer weiteren beispielhaften Ausgestaltung weist der Vorstopper eine Klemmfläche zum seitlichen Angriff an Fördergütern und insbesondere eine gegenüber der Förderrichtung geneigte Fase auf. In einer beispielhaften Ausgestaltung ist die Klemmfläche parallel oder im Wesentlichen parallel zur Förderrichtung orientiert. Beispielhaft ist die Klemmfläche im Wesentlichen eine vertikale Fläche, die an Seitenflächen eines Förderguts eingreifen kann. Es versteht sich, dass die Klemmfläche leicht gegenüber der Förderrichtung geneigt sein kann.

In einer beispielhaften Ausgestaltung weist der Vorstopper in der Förderrichtung vor der Klemmfläche (also stromaufwärtig gegenüber der Klemmfläche) eine Einführhilfen in Form einer Schräge, Rundung oder Fase auf. Auf diese Weise wird die Gefahr verringert, dass ein sich annäherndes Fördergut mit seiner Stirnseite (Frontseite in Förderrichtung) am Vorstopper hängenbleibt. Stattdessen kann sich der Vorstopper seitlich an Flanken des Förderguts anschmiegen, um dieses kraftschlüssig zu klemmen.

Gemäß einer weiteren beispielhaften Ausgestaltung weist der Stopper einen Finger zum formschlüssigen Halten von Fördergütern und insbesondere eine Führungsrolle zur seitlichen Führung passierender Fördergüter auf. Der Stopper dient also primär dazu, in der ausgefahrenen Position die Förderstrecke formschlüssig zu blockieren. Die Führungsrolle vereinfacht das Passieren von Fördergütern, wenn die Förderstrecke in der eingefahrenen Position des Stoppers freigegeben ist.

Gemäß einem weiteren Aspekt bezieht sich die vorliegende Offenbarung auf eine Vereinzelungsvorrichtung mit einer ersten Vereinzelungseinheit und einer zweiten Vereinzelungseinheit, wobei die erste Vereinzelungseinheit und die zweite Vereinzelungseinheit an einander abgewandten Seiten einer Förderstrecke angeordnet und einander zugewandt sind. Zumindest die erste Vereinzelungseinheit oder die zweite Vereinzelungseinheit sind gemäß zumindest einer hierin beschriebenen Ausführungsformen gestaltet.

Beispielhaft sind die erste Vereinzelungseinheit und die zweite Vereinzelungseinheit seitlich (rechts und links in Bezug auf die Förderrichtung) an der Förderstrecke angeordnet, um Fördergüter bedarfsweise zu halten und freizugeben. Beispielsweise kann ein Ladehilfsmittel an seiner rechten Flanke und seiner linken Flanke (in Bezug auf die Förderrichtung) durch den Vorstopper kontaktiert und gehalten werden.

Gemäß einem weiteren Aspekt bezieht sich die vorliegende Offenbarung auf eine Förderbahn, insbesondere eine Rollenbahn, mit einer Förderstrecke und einer Vereinzelungsvorrichtung gemäß zumindest einer der hierin beschriebenen Ausgestaltungen. Beispielhaft ist die Förderbahn als Schwerkraftrollenbahn gestaltet.

Gemäß einem weiteren Aspekt bezieht sich die vorliegende Offenbarung auf ein Verfahren zur Vereinzelung von Fördergütern bei einer Förderstrecke mit den folgenden Schritten:
- Bereitstellung einer insbesondere als Rollenbahn gestalteten Förderbahn mit einer Förderstrecke, der zumindest eine Vereinzelungseinheit gemäß zumindest einer der hierin beschriebenen Ausgestaltungen zugeordnet ist,
- Betätigen des Betätigungsanschlags des Schiebers, um den Schieber aus einer zweiten Position, insbesondere einer stromabwärtigen Position, in eine erste Position, insbesondere eine stromaufwärtige Position, zu bewegen, umfassend:
   - Bewegen des Stoppers in eine eingefahrene Position zur Abgabe eines ersten Förderguts, und
   - Bewegen des Vorstoppers in eine ausgefahrene Position zum Festhalten eines zweiten Förderguts,
   - Entlasten des Betätigungsanschlags des Schiebers, um den Schieber aus der ersten Position in die zweite Position zu bewegen, umfassend:
   - Bewegen des Vorstoppers in eine eingefahrene Position zur Freigabe des zweiten Förderguts, und
   - Bewegen des Stoppers in eine ausgefahrene Position zum Festhalten des zweiten Förderguts.

Auf diese Weise wird die der Offenbarung zugrunde liegende Aufgabe vollständig gelöst.

Zwischen dem Schritt des Betätigens des Betätigungsanschlags des Schiebers und dem Schritt des Entlastens des Betätigungsanschlags des Schiebers kann ein Fördergut (oder ein Ladehilfsmittel) von der Förderstrecke entnommen werden. Dies kann eine Übergabe an ein Förderfahrzeug umfassen, insbesondere an das Förderfahrzeug, das zur Betätigung des Betätigungsanschlags genutzt wird.

Wenn der Betätigungsanschlag entlastet wird, kann beispielsweise eine Rückstellfeder dafür sorgen, dass der Schieber aus der ersten Position in die zweite Position bewegt wird. Es ist grundsätzlich auch vorstellbar, den Betätigungsanschlag abwechselnd zu drücken und zu ziehen, um den Schieber zwischen der ersten Position und der zweiten Position hin und her zu bewegen.

Üblicherweise wird der beschriebene Zyklus (Belasten und Entlasten des Betätigungsanschlags) mehrmals wiederholt, um eine gewünschte Menge der Fördergüter zu vereinzeln und von der Förderstrecke an Förderfahrzeuge zu übergeben.

Das Festhalten durch den Vorstopper umfasst insbesondere ein seitliches Klemmen des Förderguts, zumindest an seiner rechten Flanke oder seiner linken Flanke.

Das offenbarungsgemäße Verfahren erlaubt ein sicheres und produktives Vereinzeln, wobei vorzugsweise auf separate Aktoren und separate Sensorik bei den Vereinzelungseinheit verzichtet werden kann. Beispielhaft dient ein Förderfahrzeug als Betätiger, indem das Förderfahrzeug selbst gegen den Betätigungsanschlag gefahren wird. Beispielhaft kann Sensorik des Förderfahrzeug genutzt werden, um eine Übernahme eines Förderguts (und dadurch mittelbar eine zuvor erfolgte Vereinzelung) zu erfassen.

Es versteht sich, dass das offenbarungsgemäße Verfahren gemäß beispielhaften Ausgestaltungen analog zu offenbarungsgemäßen Vereinzelungseinheit weitergebildet sein kann. Mit anderen Worten können abhängige Vorrichtungsansprüche sowie Detailbeschreibungen hierzu auch zur weiteren Klarstellung und Detaillierung des unabhängigen Verfahrensanspruchs genutzt werden.

Es versteht sich, dass die vorstehend genannten und die nachstehend noch zu erläuternden Merkmale der Offenbarung nicht nur in der jeweils angegebenen Kombination, sondern auch in anderen Kombinationen oder in Alleinstellung verwendbar sind, ohne den Rahmen der vorliegenden Offenbarung zu verlassen.

Weitere Merkmale und Vorteile ergeben sich aus der nachfolgenden Beschreibung mehrerer bevorzugter Ausführungsbeispiele unter Bezugnahme auf die Zeichnungen. Es zeigen:
- Fig. 1:: eine schematische Draufsicht auf eine Förderstrecke mit einer Vereinzelungsvorrichtung;
- Fig. 2: eine schematische Draufsicht auf eine Vereinzelungseinheit in einer spezifischen Betriebsstellung;
- Fig. 3:: eine weitere Draufsicht auf die Vereinzelungseinheit gemäß Fig. 2 in einer von Fig. 2 abweichenden Betriebsstellung;
- Fig. 4:: eine perspektivische Ansicht der in den Figuren 2 und 3 gezeigten Vereinzelungseinheit, wobei aus Veranschaulichungsgründen Komponenten entfernt sind;
- Fig. 5:: eine auf Fig. 4 beruhende, gebrochene Teilansicht zur Veranschaulichung der in Fig. 2 gezeigten Betriebsstellung;
- Fig. 6:: eine weitere auf Fig. 4 beruhende, gebrochene Teilansicht zur Veranschaulichung der in Fig. 3 gezeigten Betriebsstellung; und
- Fig. 7:: ein schematisches Blockdiagramm zur Veranschaulichung einer Ausgestaltung eines Verfahrens zur Vereinzelung von Fördergütern.

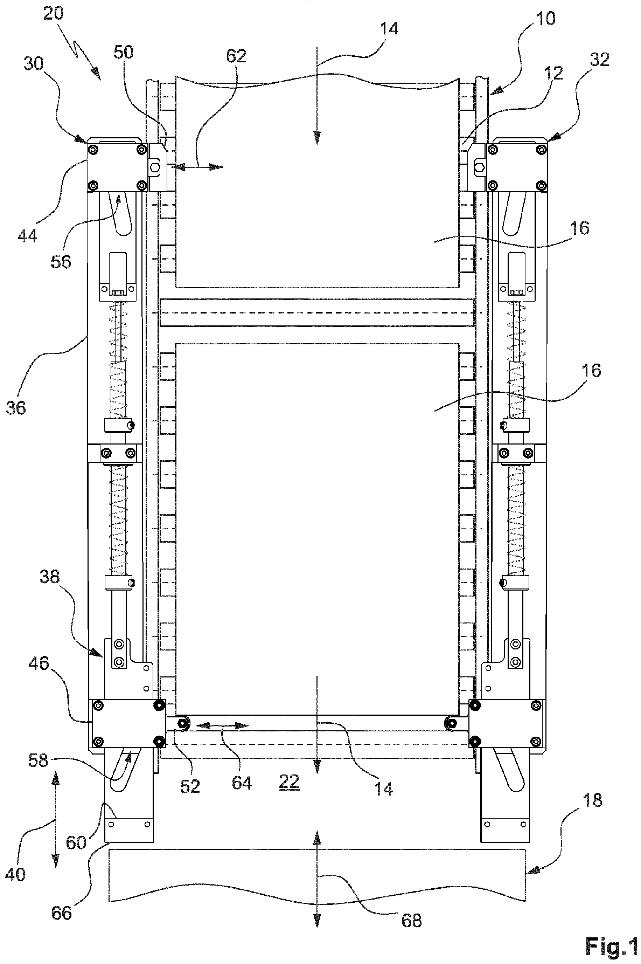

Fig. 1 veranschaulicht anhand einer schematischen Draufsicht einen Entnahmebereich einer insgesamt mit 10 bezeichneten Förderstrecke, die eine Rollenbahn 12 umfasst. Die Rollenbahn 12 ist beispielhaft als Schwerkraftrollenbahn gestaltet, so dass auf Antriebe für die Bewegung entlang der Förderstrecke 10 verzichtet werden kann. Dies ist jedoch nicht einschränkend zu verstehen. Allgemein bezieht sich die vorliegende Offenbarung auf Förderbahnen, die beispielsweise als Rollenbahn gestaltet sind. Andere Gestaltungen von Förderbahnen sind denkbar, beispielsweise Bandförderer oder dergleichen.

Entlang der als Rollenbahn 12 gestalteten Förderstrecke 10 können Fördergüter 16 in einer Förderrichtung 14 stromabwärts in Richtung auf eine Vereinzelungsvorrichtung 20, die bei einem Endbereich 22 der Förderstrecke 10 angeordnet ist, transportiert werden. In dem zur Veranschaulichung offenbarungsgemäßer Ausgestaltungen dienenden Ausführungsbeispiel gemäß den Figuren 1-6 werden Fördergüter 16 entlang der Rollenbahn 12 bewegt und durch die Vereinzelungsvorrichtung 20 bedarfsweise vereinzelt. Dies kann allgemein auch auf Ladehilfsmittel und andere Fördergüter 16 angewandt werden. Die Offenbarung ist daher in dieser Hinsicht nicht einschränkend zu verstehen.

Die Vereinzelungsvorrichtung 20 ist dem Endbereich 22 zugeordnet, um dort bedarfsweise vereinzelte Fördergüter 16 zu entnehmen und an ein Förderfahrzeug 18 zu übergeben. Das Förderfahrzeug 18 ist beispielhaft als Flurfördergerät gestaltet, Beispielsweise als AGV (Automated Guided Vehicle - Fahrerloses Transportfahrzeug) oder AMR (Autonomer mobiler Roboter).

Die Vereinzelungsvorrichtung 20 umfasst im Ausführungsbeispiel zwei Vereinzelungseinheiten 30, 32, die seitlich zur Rollenbahn 12 angeordnet sind. Mit anderen Worten ist bei einer Betrachtung entlang der Förderrichtung 14 eine rechte Vereinzelungseinheit 30 und eine linke Vereinzelungseinheit 32 vorgesehen. Im Ausführungsbeispiel wirken die Vereinzelungseinheit 30, 32 paarweise zusammen, um Fördergüter 16 zu vereinzeln, die in der Förderrichtung 14 entlang der Förderstrecke 10 zwischen den Vereinzelungseinheiten 30, 32 transportiert werden.

In einer beispielhaften Ausgestaltung sind die Vereinzelungseinheiten 30, 32 zumindest teilweise symmetrisch oder spiegelsymmetrisch zueinander (in Bezug auf die Förderrichtung 14) gestaltet. Nachfolgend wird die Gestaltung der Vereinzelungseinheit 30 näher veranschaulicht. Es versteht sich, dass die Vereinzelungseinheit 32 gleichermaßen gestaltet sein kann.

Die Vereinzelungseinheit 30 umfasst eine Basis 36, die auch als Träger bezeichnet sein kann. Im Ausführungsbeispiel ist die Basis 36 seitlich zur Rollenbahn 12 orientiert und beispielsweise an einem Gestell der Rollenbahn 12 befestigt. Die Basis 36 trägt weitere Komponenten der Vereinzelungseinheit 30.

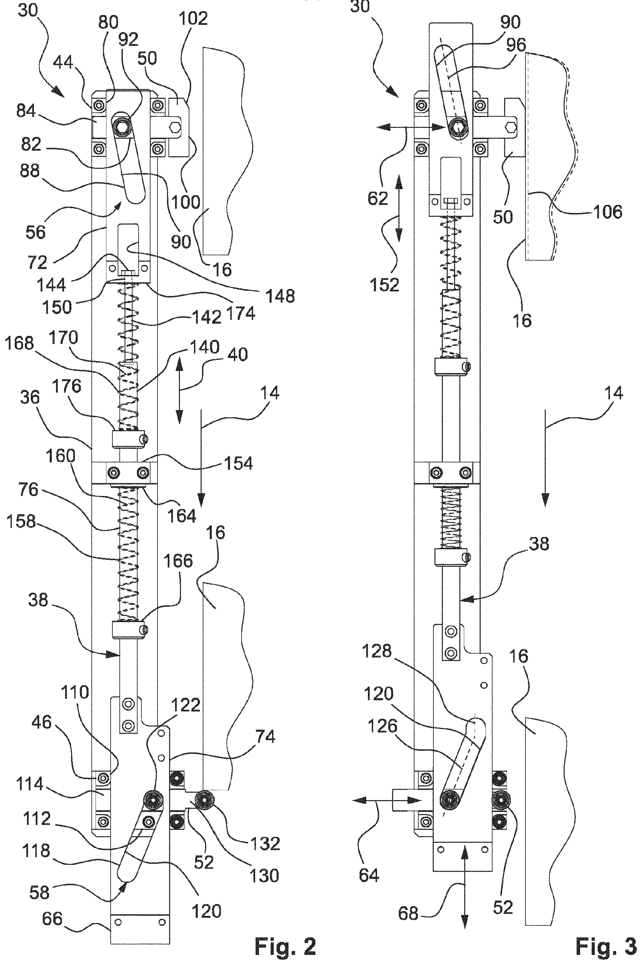

Die Vereinzelungseinheit 30 umfasst ferner einen Schieber 38, der beweglich an der Basis 36 gehalten ist. Der Schieber 38 ist in einer Schubrichtung 40 zwischen einer ersten Position und einer zweiten Position verlagerbar. Bei der ersten Position handelt es sich um eine stromaufwärtige Position (vergleiche auch Fig. 3). Bei der zweiten Position handelt es sich um eine stromabwärtige Position (vergleiche auch Fig. 2). Die Bewegung des Schiebers 38 in der Schubrichtung 40 kann zu Zwecken der Vereinzelung genutzt werden. Insgesamt ist die Vereinzelungsvorrichtung 20 im Ausführungsbeispiel schleusenartig gestaltet.

Die Basis 36 trägt ein stromaufwärtiges Lagerstück 44 und ein stromabwärtiges Lagerstück 46. Fördergüter 16, die entlang der Förderrichtung 14 transportiert werden, passieren zuerst das stromaufwärtige Lagerstück 44 und danach das stromabwärtige Lagerstück 46. Die Lagerstücke 44, 46 dienen direkt oder indirekt als Lagerung für die Bewegung des Schiebers 38 in der Schubrichtung 40.

Am ersten Lagerstück 44 ist ferner ein Vorstopper 50 gelagert, der dazu ausgebildet ist, in der Förderrichtung 14 nachrückende (stromaufwärtige) Fördergüter 16 bedarfsweise festzuhalten oder freizugeben. Am zweiten Lagerstück 46 ist ferner ein Stopper 52 gelagert, der dazu ausgebildet ist, Fördergüter 16, die den Vorstopper 50 in der Förderrichtung 14 passiert haben, bedarfsweise zu stoppen oder freizugeben. Der Vorstopper 50 ist entgegen der Förderrichtung 14 gegenüber dem Stopper 50 (stromaufwärts) versetzt. Aus Sicht des Stoppers 50 ist der Vorstopper 52 stromaufwärtig angeordnet. Aus Sicht des Vorstoppers 52 ist der Stopper 50 stromabwärtig angeordnet.

Der Vorstopper 50 und der Stopper 52 sind beweglich, wobei die Bewegung des Vorstoppers 50 und die Bewegung des Stoppers 52 über den Schieber 38 miteinander gekoppelt sind. Die Vereinzelungseinheit 30 umfasst einen ersten Koppelmechanismus 56, der dem Vorstopper 50 zugeordnet ist, und einen zweiten Koppelmechanismus 58, der dem Stopper 52 zugeordnet ist. Die Koppelmechanismen 56, 58 dienen zur Bewegungsübertragung und zur Bewegungsumlenkung. Eine Betätigungsbewegung kann beispielsweise an einem stromabwärtigen Ende 60 des Schiebers 38 eingeleitet werden.

Der Vorstopper 50 ist schräg oder quer zur Förderrichtung 14 zwischen einer eingefahrenen und einer ausgefahrenen Position beweglich, vergleiche auch den mit 62 bezeichneten Doppelpfeil in Fig. 1. Der Stopper 52 ist im Ausführungsbeispiel schräg oder quer zur Förderrichtung 14 zwischen einer eingefahrenen und einer ausgefahrenen Position beweglich, vergleiche auch den mit 64 bezeichneten Doppelpfeil.

Am stromabwärtigen Ende 60 des Schiebers 38 ist beispielhaft ein Betätigungsanschlag 66 ausgebildet, der für Förderfahrzeuge 18 erreichbar ist. Auf diese Weise kann das Förderfahrzeug 18 in der Betätigungsrichtung 68 (vergleiche den zugehörigen Doppelpfeil in Fig. 1) auf den Betätigungsanschlag 66 einwirken, um den Schieber 38 zwischen der ersten Position und der zweiten Position zu verfahren. Im Falle einer elastischen Rückstellung (Rückstellfeder oder dergleichen) kann ein Vereinzelungszyklus beispielsweise dadurch ausgelöst werden, dass das Förderfahrzeug 18 einmalig den Betätigungsanschlag 66 stromaufwärts (entgegen der Förderrichtung 14) schiebt.

Der Vorstopper 50 und der Stopper 52 sind derart miteinander gekoppelt, dass bei einer Bewegung des Schiebers 38 in einer bestimmten Richtung (stromaufwärts oder stromabwärts) einander entgegengerichtete Bewegungen des Vorstoppers 50 und des Stoppers 52 folgen. Mit anderen Worten sind also der erste Koppelmechanismus 56 und der zweite Koppelmechanismus 58 derart gestaltet, dass der Vorstopper 50 ausfährt, wenn der Stopper 52 einfährt, und dass der Vorstopper 50 einfährt, wenn der Stopper 52 ausfährt. Die Bewegungen (vergleiche die Pfeile 62, 64) des Vorstoppers 50 und des Stoppers 52 müssen nicht perfekt miteinander synchronisiert sein. Es ist auch keine unbedingte Gleichzeitigkeit erforderlich. Jedoch ist in funktioneller Hinsicht eine gegensinnige Bewegung des Vorstoppers 50 und des Stoppers 52 bei einem Hub des Schiebers 38 gewünscht, um Fördergüter 16 zu vereinzeln.

Mit ergänzender Bezugnahme auf die Figuren 2-6 wird die Gestaltung der Vereinzelungseinheit 30 weiter veranschaulicht. Die Figuren 2 und 3 zeigen miteinander korrespondierende Ansichten der Vereinzelungseinheit 30 in zwei unterschiedlichen Zuständen. In Fig. 2 ist der Schieber 38 in der zweiten Position, also der stromabwärtigen Position. In Fig. 3 ist der Schieber 38 in der ersten Position, also der stromaufwärtigen Position.

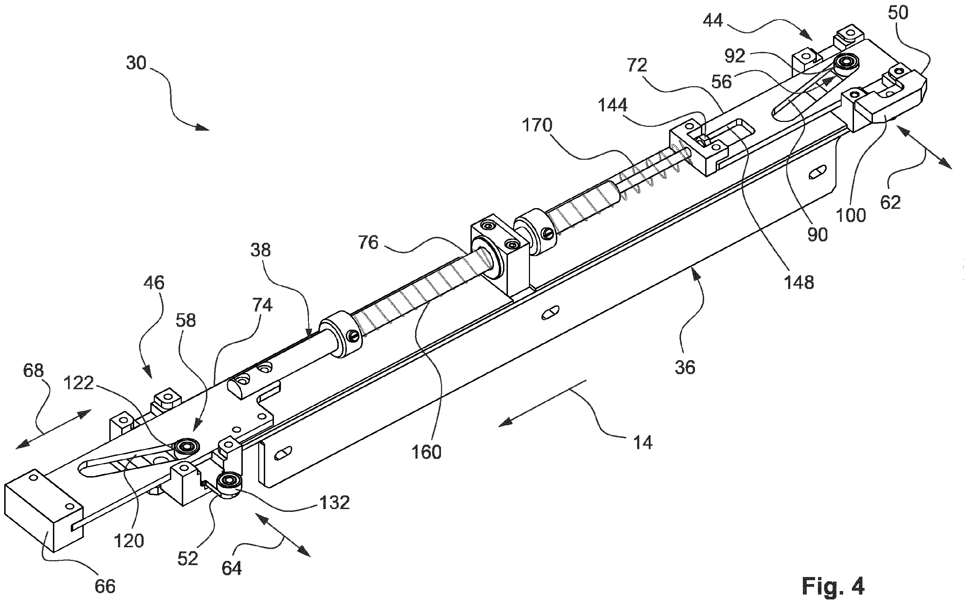

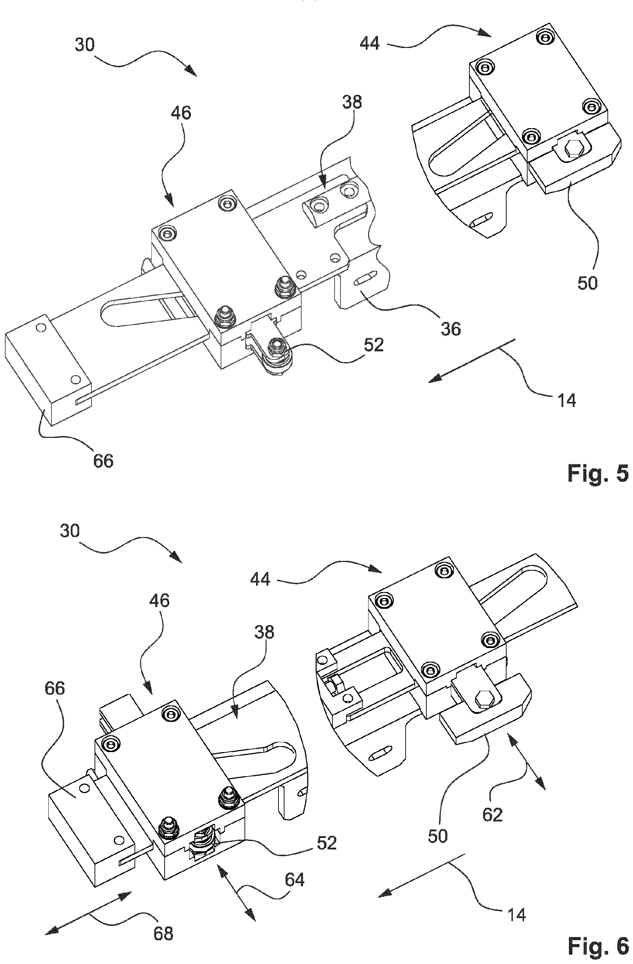

Bei der in Fig. 2 gezeigten stromabwärtigen Position des Schiebers 38 ist der Vorstopper 50 eingefahren und der Stopper 52 ausgefahren. Der Vorstopper 50 kann ein Ladehilfsmittel 16 passieren lassen. Der Stopper 52 kann ein Ladehilfsmittel 16 festhalten. Auch die in Fig. 4 gezeigte perspektivische Darstellung zeigt die stromabwärtige Position des Schiebers 38. Ferner veranschaulicht Fig. 5 diesen Zustand anhand einer vergrößerten perspektivischen gebrochenen Darstellung.

Bei der in Fig. 3 gezeigten stromaufwärtigen Position des Schiebers 38 ist der Vorstopper 50 ausgefahren und der Stopper 52 eingefahren. Der Vorstopper 50 kann ein Ladehilfsmittel 16 festhalten. Der Stopper 52 kann ein Ladehilfsmittel 16 passieren lassen, damit dieses beispielsweise von einem Förderfahrzeug 18 (vergleiche Fig. 1) übernommen werden kann. Fig. 6 veranschaulicht diesen Zustand anhand einer vergrößerten perspektivischen gebrochenen Darstellung.

Der Schieber 38 weist im Ausführungsbeispiel gemäß Fig. 2 einen ersten Schubabschnitt 72 und einen zweiten Schubabschnitt 74 auf. Der erste Schubabschnitt 72 kann auch als stromaufwärtiger Schubabschnitt bezeichnet werden. Der zweite Schubabschnitt 74 kann auch als stromabwärtiger Schubabschnitt bezeichnet werden. Zwischen den Schubabschnitten 72, 74 erstreckt sich eine Schubstange 76. Beim zweiten Schubabschnitt 74 ist der Betätigungsanschlag 66 angeordnet. Fig. 3 zeigt, dass in der Betätigungsrichtung 68 auf den Betätigungsanschlag 66 eingewirkt werden kann, um den Schieber 38 ausgehend von der in Fig. 2 gezeigten zweiten (stromabwärtigen) Position in die in Fig. 3 gezeigte erste (stromaufwärtige) Position zu verbringen.

Das stromaufwärtige Lagerstück 44 stellt eine Längsschubführung 80 für den ersten Schubabschnitt 72 und eine Querschubführung 82 bereit. Der Schubabschnitt 72 ist entlang der Längsschubführung 80 in der Schubrichtung 40 beweglich geführt. An der Querschubführung 82, die die Einfahrbewegung und Ausfahrbewegung des Vorstoppers 50 führt (vergleiche auch den mit 62 bezeichneten Doppelpfeil in Fig. 3), ist eine Stange 84 gelagert, die den Vorstopper 50 trägt. Der erste Koppelmechanismus 56 weist beim ersten Schubabschnitt 72 eine Umlenkführung 88 auf, die im Ausführungsbeispiel als Führungskulisse 90 gestaltet ist. An der Stange 84 für den Vorstopper 50 ist ein Mitnehmer 92 gelagert, der in die Führungskulisse 90 eingreift. Der Mitnehmer 92 ist als Rolle oder Bolzen gestaltet.

Die Führungskulisse 90 weist eine Haupterstreckungsrichtung 96 auf, die gegenüber der Förderrichtung 14 geneigt ist, vergleiche auch Fig. 3. Auf diese Weise ergibt sich bei einer Bewegung des Schiebers 38 in der Schubrichtung 40 eine resultierende Bewegung 62 des Vorstoppers 50. Die Richtung der Bewegung 62 ist schräg zur Schubrichtung 40, insbesondere quer zur Schubrichtung 40.

Der Vorstopper 50 weist eine Klemmfläche 100 auf, die zum kraftschlüssigen Festhalten eines Förderguts 16 durch seitlichen Angriff nutzbar ist. An ihrem stromaufwärtigen Ende schließt sich an die Klemmfläche 100 eine Fase 102 an, die ein Einrücken von Fördergütern 16 vereinfacht. In Fig. 3 greift der Vorstopper 50 seitlich an ein Fördergut 16 an. In einer beispielhaften Ausgestaltung ist die Vereinzelungseinheit 30 ferner dazu ausgebildet, auch im Falle eines breiten Versatzes (vergleiche Bezugszeichen 106 in Fig. 3) an ein Fördergut 16 anzugreifen, um dieses kraftschlüssig festzuhalten.

Das stromabwärtige Lagerstück 46 stellt eine Längsschubführung 110 für den zweiten Schubabschnitt 74 und eine Querschubführung 112 bereit. Der Schubabschnitt 74 ist entlang der Längsschubführung 110 in der Schubrichtung 40 beweglich geführt. An der Querschubführung 112, die die Einfahrbewegung und Ausfahrbewegung des Stoppers 52 führt (vergleiche auch den mit 64 bezeichneten Doppelpfeil in Fig. 3) ist eine Stange 114 gelagert, die den Stopper 52 trägt. Der zweite Koppelmechanismus 58 weist beim zweiten Schubabschnitt 74 eine Umlenkführung 118 auf, die im Ausführungsbeispiel als Führungskulisse 120 gestaltet ist. An der Stange 114 für den Stopper 52 ist ein Mitnehmer 122 gelagert, der in die Führungskulisse 120 eingreift. Der Mitnehmer 122 ist als Rolle oder Bolzen gestaltet.

Die Führungskulisse 120 weist eine Haupterstreckungsrichtung 126 auf, die gegenüber der Förderrichtung 14 geneigt ist, vergleiche auch Fig. 3. Auf diese Weise ergibt sich bei einer Bewegung des Schiebers 38 in der Schubrichtung 40 eine resultierende Bewegung 64 des Stoppers 50. Die Richtung der Bewegung 64 ist schräg zur Schubrichtung 40, insbesondere quer zur Schubrichtung 40. Die Führungskulisse 120 des zweiten Koppelmechanismus 58 weist ferner einen Endbereich 128 auf, der sich etwa parallel zur Förderrichtung 14 bzw. zur Schubrichtung 40 erstreckt. In diesem Bereich erfolgt also bewusst gerade keine Umlenkung der Bewegung des Schiebers 38 in der Schubrichtung, damit ist eine ausgefahrene Endposition des Stoppers 52 definiert.

Der Stopper 52 umfasst einen Finger 130, der sich ausgehend von der Stange 114 in Richtung auf die Förderstrecke 10 (vergleiche Fig. 1) erstreckt. Im ausgefahrenen Zustand des Stoppers 52 ragt der Finger 130 in die Förderstrecke 10 hinein, um dort Fördergüter 16 formschlüssig festzuhalten. Im Ausführungsbeispiel gemäß Fig. 2 ist am Ende des Fingers 130 eine Rolle 132 ausgebildet, die das Passieren von freigegebenen Fördergütern 16 vereinfachen soll. Wenn sich der Stopper 52 in der in Fig. 3 gezeigten eingefahrenen Position befindet, kann das Fördergut 16 den Stopper 52 passieren und an ein Förderfahrzeug 18 übergeben werden.

Im Ausführungsbeispiel gemäß den Figuren 2-4 weist die Schubstange 76 ein erstes Stangenteil 140 und ein zweites Stangenteil 142 auf. Dies ist nicht einschränkend zu verstehen. An ihrem stromaufwärtigen Ende weist die Schubstange 76 beispielhaft ein Kopfstück 144 auf, das in einer Freisparung 148 beim ersten Schubabschnitt 72 angeordnet ist. Die Schubstange 76 erstreckt sich durch einen Durchgang 150 in die Freisparung 148 hinein. Somit gibt es keine starre Verbindung zwischen dem ersten Schubabschnitt 72 und dem zweiten Schubabschnitt 74. Mit anderen Worten ist eine Relativbewegung zwischen dem ersten Schubabschnitt 72 und dem zweiten Schubabschnitt 74 möglich, vergleiche den mit 152 bezeichneten Doppelpfeil in Fig. 3. Auf diese Weise kann die Ausfahrbewegung des Vorstoppers 50 an unterschiedliche Breiten von Fördergütern 16 angepasst werden.

Die Schubstange 76 erstreckt sich ausgehend vom zweiten Schubabschnitt 74 in Richtung auf den ersten Schubabschnitt 72. Die Basis 36 trägt einen Führungsblock 154. Die Schubstange 76 erstreckt sich durch den Führungsblock 154 hindurch. Die Vereinzelungseinheit 30 weist ein Rückstellelement 158 auf, das im Ausführungsbeispiel als Rückstellfeder 160 gestaltet ist. Das Rückstellelement 158 ist beispielhaft am Stangenteil 140 geführt. Das Rückstellelement 158 erstreckt sich zwischen einem stromaufwärtigen Anschlag 164 und einem stromabwärtigen Anschlag 166. Der stromaufwärtige Anschlag 164 sitzt im Ausführungsbeispiel fest am Führungsblock 154. Der stromabwärtige Anschlag 176 sitzt fest auf Schubstange 76. Auf diese Weise drängt das Rückstellelement 158 den Schieber 38 in die in Fig. 2 gezeigte zweite Stellung (stromabwärtige Stellung).

Die Vereinzelungseinheit 30 weist ferner ein Vorspannelement 168 auf, das beispielsweise als Vorspannfeder 170 gestaltet ist. Im Ausführungsbeispiel ist das Vorspannelement 168 am ersten Stangenteil 140 und am zweiten Stangenteil 142 geführt. Das Vorspannelement 168 ist zwischen dem ersten Schubabschnitt 72 und dem Führungsblock 154 angeordnet. Das Vorspannelement 168 erstreckt sich zwischen einem stromaufwärtigen Anschlag 174 und einem stromabwärtigen Anschlag 176. Der stromabwärtige Anschlag 176 sitzt fest auf der Schubstange 76. Der stromaufwärtige Anschlag 174 ist beim ersten Schubabschnitt 72 ausgebildet. Mit anderen Worten drängt also das Vorspannelement 168 den ersten Schubabschnitt 72 und den zweiten Schubabschnitt 74 auseinander.

Weil die Schubstange 76 nicht starr mit dem ersten Schubabschnitt 72 gekoppelt ist, ist dort eine Ausgleichsbewegung möglich, vergleiche wiederum den Doppelpfeil 152 in Fig. 3. Mit anderen Worten kann die Schubstange 76 (bzw. deren Stangenteil 142) in die Freisparung 148 eintauchen, wobei sich der Abstand zwischen dem ersten Schubabschnitt 72 und dem zweiten Schubabschnitt 74 verringert. Dies ist beispielsweise dann der Fall, wenn der Vorstopper 50 seitlich an ein Fördergut 16 angreift und dieses klemmt, aber der Schieber 38 in der Schubrichtung 40 nicht bis zu einem Anschlag in Richtung auf die stromaufwärtige Position (erste Position) verfahren ist. Auf diese Weise können etwaige Abweichungen bei der Breite des Förderguts 106 oder andere Gestaltabweichungen kompensiert werden. Der erste Koppelmechanismus 56 und der zweite Koppelmechanismus 58 sind elastisch miteinander verbunden. Insbesondere kann das Vorspannelement 158 Energie speichern, wenn sich ein gegebener Abstand zwischen dem ersten Schubabschnitt 72 und dem zweiten Schubabschnitt 74 verringert.

Das Vorspannelement 158 dient auch als Kraftbegrenzer. Die in den Figuren 2-4 veranschaulichte Gestaltung trägt nämlich auch dazu bei, dass im Falle einer Anlage des Vorstoppers 50 am Fördergut 16 die Klemmkraft nicht übermäßig ansteigt, wenn der Betätigungsanschlag 66 und folglich der zweite Schubabschnitt 74 weiter in Richtung auf die stromaufwärtige Position gedrängt werden.

Gleichwohl gibt es eine funktionale Kopplung zwischen dem ersten Koppelmechanismus 56 und dem zweiten Koppelmechanismus 58, die beide gemeinsam durch den Schieber 38 betätigt werden. Grundsätzlich werden auf diese Weise der Vorstopper 50 und der Stopper 52 gegensinnig bewegt, wenn der Schieber 38 zwischen der ersten (stromaufwärtigen) Position und der zweiten (stromabwärtigen) Position bewegt wird. Die Figuren 4-6 veranschaulichen anhand perspektivischer Darstellungen diesen funktionalen Zusammenhang. Eine Bewegung des Betätigungsanschlag 66 in der Bewegungsrichtung 68 führt zu einer Einfahrbewegung bzw. Ausfahrbewegung des Vorstoppers 50 und des Stoppers 52, vergleiche die Doppelpfeile 62, 64 in den Figuren 4 und 6. Die Rückstellbewegung kann durch Ziehen am Betätigungsanschlag 66 (im Ausführungsbeispiel richtungsgleich mit der Förderbewegung 14) erzeugt werden. Gleichwohl ist auch die Verwendung eines Rückstellelements 158 vorstellbar, beispielsweise in Form einer Rückstellfeder 160.

Die Vorspannfeder 170 überträgt Bewegungen in der Bewegungsrichtung 68 zwischen dem zweiten Schubabschnitt 74 und dem ersten Schubabschnitt 72. Dies erfolgt jedoch unter Beachtung der Elastizität der Vorspannfeder 170 sowie der möglichen Relativbewegung (Doppelpfeil 152 in Fig. 3) zwischen dem zweiten Schubabschnitt 74 und dem ersten Schubabschnitt 72. Der erste Schubabschnitt 72 und der zweite Schubabschnitt 74 sind elastisch miteinander gekoppelt. Dies führt dazu, dass der Vorstopper 50 mit seiner Klemmfläche 100 Fördergüter 16 (seitlich) kraftschlüssig greifen und halten kann, und zwar auch im Falle maßlicher Abweichungen bei der Breite der Fördergüter 16.

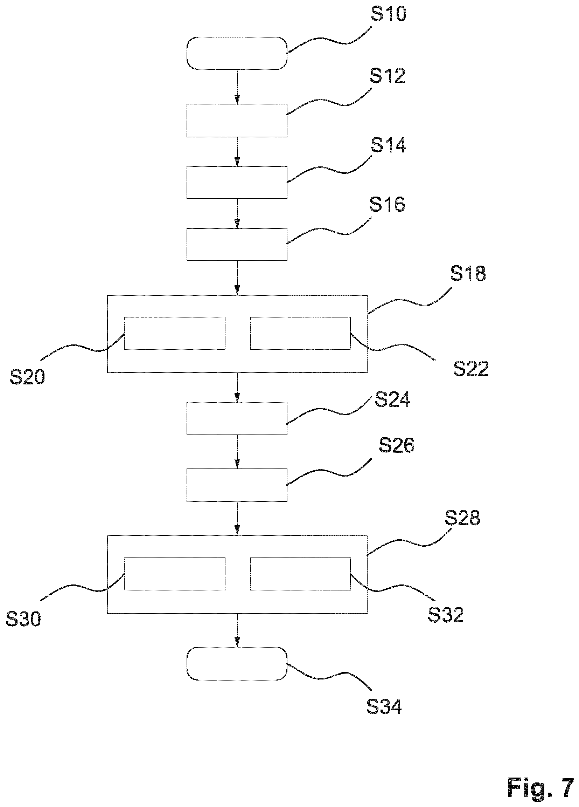

Mit Bezugnahme auf Fig. 7 wird anhand eines schematischen Blockdiagramms ein Verfahren zur Vereinzelung von Fördergütern/Ladehilfsmitteln bei einer Förderstrecke mit einer Rollenbahn veranschaulicht.

Das Verfahren startet bei einem Schritt S10. Es folgt ein Schritt S12, der die Bereitstellung einer insbesondere als Rollenbahn gestalteten Förderstrecke umfasst. Es schließt sich ein Schritt S14 an, der die Bereitstellung einer Vereinzelungseinheit gemäß zumindest einer der hierin beschriebenen Ausgestaltungen umfasst. Insbesondere umfasst der Schritt S14 die Bereitstellung einer Vereinzelungsvorrichtung mit zwei einander gegenüberliegenden Vereinzelungseinheiten, die an den beiden Seiten einer Förderstrecke bei einem Entnahmeende der Rollenbahn angeordnet sind. Die Vereinzelungseinheiten weisen jeweils einen Vorstopper und einen Stopper auf. Die Vereinzelungsvorrichtung ist insgesamt schleusenähnlich gestaltet.

Ein Schritt S16 umfasst die Betätigung eines Betätigungsanschlags durch ein Förderfahrzeug, das sich dem Entnahmeende der Förderstrecke nähert. Mit anderen Worten kann also das Förderfahrzeug selbst die für die Vereinzelung erforderliche Bewegung erzeugen.

Beispielhaft umfasst die Bewegung des Betätigungsanschlags in einem nachfolgenden Schritt S18 eine Bewegung eines Schiebers der Vereinzelungseinheit aus einer zweiten Position (stromabwärtigen Position) in eine erste Position (stromaufwärtige Position). Dies umfasst Teilschritte S20, S22, wobei der Teilschritt S20 die Bewegung des Stoppers aus einer ausgefahrenen Position in eine eingefahrene Position umfasst, und wobei der Teilschritt S22 die Bewegung des Vorstoppers aus einer eingefahrenen Position in eine ausgefahrene Position umfasst. Die Teilschritte S20, S22 können zumindest zeitweise zeitparallel ablaufen.

Auf diese Weise kann ein zwischen dem Vorstopper und dem Stopper bereit gehaltenes Fördergut den Stopper passieren und an das Förderfahrzeug übergeben werden, vergleiche hierzu den Schritt S24. Ferner kann mit dem Vorstopper ein stromaufwärtiges Fördergut seitlich geklemmt werden, um ein Passieren zu verhindern.

In einem weiteren Schritt S26 wird der Betätigungsanschlag entlastet. Dies kann beispielsweise durch ein Wegbewegen des Förderfahrzeugs vom Betätigungsanschlag erfolgen. Durch diese Freigabe kann beispielhaft durch ein Rückstellelement in Form einer Rückstellfeder eine Rückstellung erzeugt werden, die den Schieber zurück in Richtung auf die zweite Position drängt. Vergleiche hierzu den Schritt S28, der Teilschritte S30, S32 umfasst.

Der Teilschritt S30 umfasst die Bewegung des Stoppers in die ausgefahrene Position. Der Teilschritt S32 umfasst die Bewegung des Vorstoppers in die eingefahrene Position. Auf diese Weise kann ein zuvor vom Vorstopper kraftschlüssig gehaltenes Fördergut den Vorstopper passieren und in einen Schleusenbereich einfahren, wobei am stromabwärtigen Ende der Stopper eine weitere Bewegung des Förderguts blockiert. Die Teilschritte S30, S32 können zumindest zeitweise zeitparallel ablaufen.

Sodann können die Schritte S16 bis S32 wiederholt werden, um weitere Fördergüter zu vereinzeln und an Förderfahrzeuge zu übergeben. Die Förderfahrzeuge aktivieren den Vereinzelungsvorgang durch Betätigung des Betätigungsanschlags. Das Verfahren endet bei einem Schritt S34.

## Patentansprüche

1. Vereinzelungseinheit (30, 32) für eine Förderstrecke (10), insbesondere eine Rollenbahn (12), wobei die Vereinzelungseinheit (30, 32) Folgendes aufweist:
- eine Basis (36), die ein stromaufwärtiges Lagerstück (44) und ein hiervon in einer Förderrichtung (14) versetztes stromabwärtiges Lagerstück (46) trägt,
wobei am stromaufwärtigen Lagerstück (44) ein ausfahrbarer Vorstopper (50) und am stromabwärtigen Lagerstück (46) ein ausfahrbarer Stopper (52) angeordnet ist, und
- einen Schieber (38), der über einen ersten Koppelmechanismus (56) mit dem Vorstopper (50) und einen zweiten Koppelmechanismus (58) mit dem Stopper (52) gekoppelt ist,
wobei der Schieber (38), insbesondere an seinem stromabwärtigen Ende (60), einen Betätigungsanschlag (66) aufweist, der von einem Förderfahrzeug (18) kontaktierbar ist, um den Schieber (38) in einer Schubrichtung (40) relativ zu dem Vorstopper (50) und dem Stopper (52) zu bewegen, so dass der Vorstopper (50) durch den ersten Koppelmechanismus (56) und der Stopper (52) durch den zweiten Koppelmechanismus (58) bewegt wird.

2. Vereinzelungseinheit (30, 32) nach Anspruch 1, wobei der Schieber (38) zwischen einer ersten Position, insbesondere einer stromaufwärtigen Position, und einer zweiten Position, insbesondere einer stromabwärtigen Position, beweglich ist, wobei in der zweiten Position des Schiebers (38) der Vorstopper (50) in eine eingefahrene Position und der Stopper (52) in eine ausgefahrene Position bringbar ist, und wobei in der ersten Position des Schiebers (38) der Vorstopper (50) in eine ausgefahrene Position und der Stopper (52) in eine eingefahrene Position bringbar ist.

3. Vereinzelungseinheit (30, 32) nach Anspruch 1 oder 2, wobei zumindest der erste Koppelmechanismus (56) oder der zweite Koppelmechanismus (58) eine mit einem Mitnehmer (92; 122) gekoppelte Führung (88; 118) aufweist, die eine Umlenkung der Bewegung des Schiebers (38) zumindest zur Bewegung des Vorstoppers (50) oder den Stoppers (52) bewirkt.

4. Vereinzelungseinheit (30, 32) nach einem der Ansprüche 1-3, wobei zumindest der erste Koppelmechanismus (56) oder der zweite Koppelmechanismus (58) eine insbesondere beim Schieber (38) ausgebildete Führungskulisse (90; 120) umfasst, die mit einem Mitnehmer (92; 122) zusammenwirkt, der insbesondere als Rolle oder Bolzen gestaltet ist.

5. Vereinzelungseinheit (30, 32) nach Anspruch 4, wobei die zumindest eine Führungskulisse (90; 120) als Langloch mit einer zumindest abschnittsweise gegenüber der Schubrichtung (40) geneigten Haupterstreckungsrichtung (96; 126) gestaltet ist.

6. Vereinzelungseinheit (30, 32) nach Anspruch 4 oder 5, wobei der erste Koppelmechanismus (56) und der zweite Koppelmechanismus (58) jeweils eine als Langloch gestaltete Führungskulisse (90; 120) aufweisen, und wobei die Führungskulisse (90) des ersten Koppelmechanismus (56) und die Führungskulisse (120) des zweiten Koppelmechanismus (58) derart gegenüber der Schubrichtung (40) geneigt sind, dass sich bei einem Hub oder Rückhub des Schiebers (38) in der Schubrichtung (40) der Vorstopper (50) und der Stopper (52) in entgegengesetzten Richtungen bewegen.

7. Vereinzelungseinheit (30, 32) nach einem der Ansprüche 1-6, wobei zumindest das stromaufwärtige Lagerstück (44) oder das stromabwärtige Lagerstück (46) eine Längsschubführung (80; 110) für den Schieber (38) und eine Querschubführung (82; 112) aufweist, wobei die Querschubführung (82; 112) beim stromaufwärtigen Lagerstück (44) die Ausfahrbewegung des Vorstoppers (50) und beim stromabwärtigen Lagerstück (46) die Ausfahrbewegung des Stoppers (52) führt.

8. Vereinzelungseinheit (30, 32) nach einem der Ansprüche 1-7, wobei der Schieber (38) ein Rückstellelement (158) aufweist, insbesondere eine Rückstellfeder (160), die sich an der Basis (36) abstützt und den Schieber (38) stromabwärts drängt.

9. Vereinzelungseinheit (30, 32) nach einem der Ansprüche 1-8, wobei der Schieber (38) einen ersten Schubabschnitt (72) beim ersten Koppelmechanismus (56) und einen zweiten Schubabschnitt (74) beim zweiten Koppelmechanismus (58) aufweist, und insbesondere wobei der erste Schubabschnitt (72) das stromaufwärtige Lagerstück (44) und der zweite Schubabschnitt (74) das stromabwärtige Lagerstück (46) durchragt.

10. Vereinzelungseinheit (30, 32) nach Anspruch 9,
wobei der Betätigungsanschlag (66) beim zweiten Schubabschnitt (74) angeordnet ist, und/oder
wobei der Schieber (38) ein Vorspannelement (168) aufweist, insbesondere eine Vorspannfeder (170), die den ersten Schubabschnitt (72) und den zweiten Schubabschnitt (74) entlang der Schubrichtung (40) auseinanderdrängt.

11. Vereinzelungseinheit (30, 32) nach Anspruch 9 oder 10, wobei sich zwischen dem ersten Schubabschnitt (72) und dem zweiten Schubabschnitt (74) eine Schubstange (76) erstreckt, die den ersten Schubabschnitt (72) und den zweiten Schubabschnitt (74) miteinander verbindet, und wobei die Schubstange (76) insbesondere eine Relativbewegung (152) zwischen dem ersten Schubabschnitt (72) und dem zweiten Schubabschnitt (74) in der Schubrichtung (40) ermöglicht.

12. Vereinzelungseinheit (30, 32) nach einem der Ansprüche 1-11,
wobei der Vorstopper (50) eine Klemmfläche (100) zum seitlichen Angriff an Fördergüter (16) und insbesondere eine gegenüber der Förderrichtung (14) geneigte Fase (102) aufweist, und/oder
wobei der Stopper (52) einen Finger (130) zum formschlüssigen Halten von Fördergütern (16) und insbesondere eine Führungsrolle (132) zur seitlichen Führung passierender Fördergüter (16) aufweist.

13. Vereinzelungsvorrichtung (20) mit einer ersten Vereinzelungseinheit (30) nach einem der Ansprüche 1-12 und einer zweiten Vereinzelungseinheit (32) nach einem der Ansprüche 1-12, wobei die erste Vereinzelungseinheit (30) und die zweite Vereinzelungseinheit (32) an einander abgewandten Seiten einer Förderstrecke (10) angeordnet und einander zugewandt sind.

14. Förderbahn, insbesondere Rollenbahn, (12) mit einer Förderstrecke (10) und einer Vereinzelungsvorrichtung (20) nach Anspruch 13.

15. Verfahren zur Vereinzelung von Fördergütern (16) bei einer Förderstrecke (10) mit den folgenden Schritten:
- Bereitstellung einer insbesondere als Rollenbahn (12) gestalteten Förderbahn mit einer Förderstrecke (10), der zumindest eine Vereinzelungseinheit (30, 32) nach einem der Ansprüche 1-12 zugeordnet ist,
- Betätigen des Betätigungsanschlags (66) des Schiebers (38), um den Schieber (38) aus einer zweiten Position, insbesondere einer stromabwärtigen Position, in eine erste Position, insbesondere eine stromaufwärtige Position, zu bewegen, umfassend:
- Bewegen des Stoppers (52) in eine eingefahrene Position zur Abgabe eines ersten Förderguts (16), und
- Bewegen des Vorstoppers (50) in eine ausgefahrene Position zum Festhalten eines zweiten Förderguts (16),
- Entlasten des Betätigungsanschlags (66) des Schiebers (38), um den Schieber (38) aus der ersten Position in die zweite Position zu bewegen, umfassend:
- Bewegen des Vorstoppers (50) in eine eingefahrene Position zur Freigabe des zweiten Förderguts (16), und
- Bewegen des Stoppers (52) in eine ausgefahrene Position zum Festhalten des zweiten Förderguts (16).
